**Europäisches Patentamt**

(19) **European Patent Office**

**Office européen des brevets**

(11) Numéro de publication: **0 185 040**
**B1**

(12) # FASCICULE DE BREVET EUROPÉEN

(45) Date de publication du fascicule du brevet:
07.02.90

(51) Int. Cl. ⁵: **G 07 F 7/08**, **G 09 C 1/02**

(21) Numéro de dépôt: **85902564.5**

(22) Date de dépôt: **28.05.85**

(86) Numéro de dépôt international:
**PCT/FR 85/00131**

(87) Numéro de publication international:
**WO 85/05713 (19.12.85 Gazette 85/27)**

(54) **PROCEDE D'IDENTIFICATION D'UN PRODUIT DESTINE A EMPECHER TOUTE FRAUDE ET DISPOSITIF METTANT EN O EUVRE CE PROCEDE.**

(30) Priorité: **29.05.84 FR 8408630**

(43) Date de publication de la demande:
**25.06.86 Bulletin 86/26**

(45) Mention de la délivrance du brevet:
**07.02.90 Bulletin 90/06**

(84) Etats contractants désignés:
**DE FR GB IT SE**

(56) Documents cité:
**EP-A-0 097 110**
**WO-A-80/02757**
**WO-A-81/00476**
**FR-A-2 181 409**
**FR-A-2 401 465**
**FR-A-2 450 011**
**FR-E-113 826**

(73) Titulaire: **IMAJE S.A.**
**9, rue Gaspard Monge Z.A. de l'Armaillier**
**F-26500 Bourg les Valence (FR)**

(72) Inventeur: **MILLET, Jean-Claude**
**16, Impasse Colbert**
**F-26500 Bourg-les-Valence (FR)**

(74) Mandataire: **Dubreuil, Annie**
**Cabinet DUBREUIL Le Suffren 23 rue des Peupliers**
**F-56100 Lorient (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe dipposition (Art. 99(1) Convention sur le brevet européen).

**Description**

L'invention concerne un procédé d'identification d'un produit destiné à empêcher toute fraude. Elle concerne également tout dispositif mettant en oeuvre ce procédé.

La réussite commerciale d'un produit dépend souvent d'une image de marque dont jouit précisément ce produit. Il est donc tentant pour des concurrents peu scrupuleux d'essayer d'abuser le client en le trompant sur la véritable origine de son achat. Il croit acquérir un produit (x) avec toutes les qualités qui lui sont propres et il acquiert en fait un produit (y) qui n'en a que l'apparence.

Devant toutes les tentatives de concurrence déloyale, chacun cherche donc des moyens d'identification et de suivi de son produit qui permettent en tout temps et en tout lieu, dans le circuit de distribution:

— de vérifier l'origine correcte du produit;
— de vérifier si le produit concerné se trouve bien dans sa zone normale de distribution;
— de suivre donc géographiquement et chronologiquement le circuit de distribution du produit depuis sa fabrication jusqu'à sa vente au client.

Il existe plusieurs procédés dans l'art connu qui tentent de résoudre ce problème. Le plus simple est l'inscription en clair de l'information sur le produit. Celle-ci est ensuite lue directement par l'opérateur ou par un procédé de lecture classique. On a recours également à l'inscription et à la lecture d'une information codée du type code à barres, dans laquelle l'identification par lecture du code peut être effectuée de manière automatique.

Un autre procédé, notamment décrit dans le brevet français 2 401 465, consiste à imprimer au moyen d'une imprimante à jet d'encre un ou plusieurs codes lisibles, identifiables individuellement, chaque code comportant en outre un arrangement de caractères alphanumériques sous une forme inversée ou négative, ceci notamment au moyen d'une commande électronique simultanée des jets d'encre imprimant les codes respectifs.

Toutes ces inscriptions, des plus simples aux plus évoluées, présentent le grave défaut de pouvoir être copiées, et surtout ne sont pas toujours faciles à inscrire sur des supports de formes variées s'écartant très largement par exemple des surfaces planes.

La présente invention a pour but de pallier ces inconvénients et concerne un procédé et son dispositif de mise en oeuvre capable d'inscrire une information sur un support, et ceci quelque soit son profil, de telle sorte que, seul le possesseur d'une clef peut en reconnaître l'authenticité et néanmoins assurer une lecture automatique de l'information.

Ce problème et resolu par les caractéristique des revendication set 6.

L'invention sera mieux comprise à l'aide des explications qui vont suivre et des 5 figures jointes qui illustrent schématiquement quelques variantes, non limitatives de l'invention.

Dans les procédés connus de reconnaissance de caractères, on utilise, généralement, une structure de caractères continus, ainsi les fontes réputées lisibles tels OCRA, OCRB, ou ECRM.

Dans la présente invention et selon une caractéristique importante, on privilégie une structure de caractères discontinue, dans laquelle chaque point composant la matrice est bien isolé des autres, ce qui est particulièrement accessible aux techniques d'écriture par projection d'encre.

La reconnaissance du caractère est obtenue par balayage et identification colonne par colonne de la position des points parmi les 35 positions possibles dans une matrice 7 x 5 par exemple.

Selon une autre caractéristique importante de l'invention, et pour lutter de manière efficace contre la fraude, on crée, volontairement et selon un adressage bien déterminé, un défaut au niveau de cette écriture matricielle, défaut qui se trouve repéré ensuite automatiquement au niveau de la lecture à condition que le dispositif de lecture comporte la clef de décodage correspondante.

Il existe certes différents moyens capables de réaliser cette écriture point par point matricielle, mais une technique particulièrement adaptée à la mise en oeuvre de l'invention est, comme cela a été dit précédemment, la technique du jet d'encre. En effet, la commande de la charge et donc de la trajectoire et de la forme des gouttes d'encre peut être facilement réalisée à partir d'un algorithme adapté pour chaque application et donc pour chaque type de marquage.

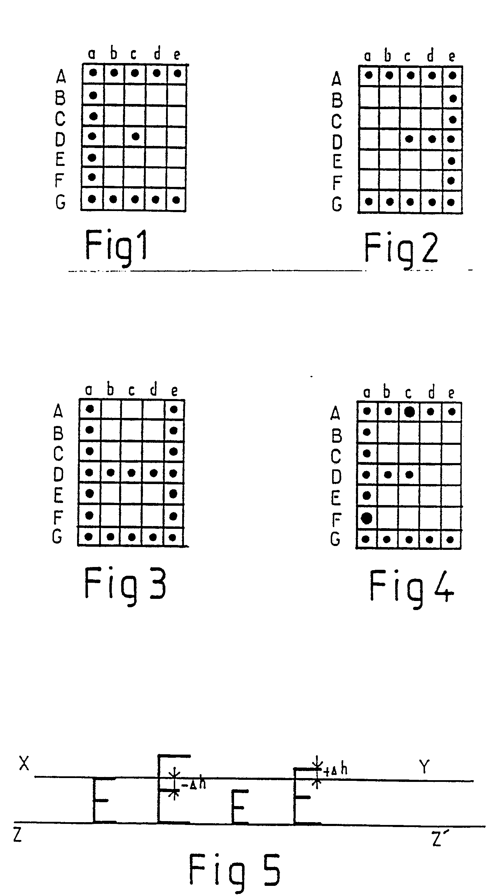

Par exemple, comme le montre la figure 1, on imprime sous forme matricielle des points représentant un E, chaque point faisant partie d'une matrice, par exemple de 7 rangées A, B, C, D, E, F, G, et de 5 colonnes a, b, c, d, e. Conformément à l'invention, on glisse alors dans l'algorithme de commande de l'imprimante à jet d'encre, une étape dont la fonction est de créer, au niveau de l'écriture, un défaut qui ne rend pas l'information globale illisible mais que seul le dispositif de lecture, à condition qu'il soit adapté, donc muni d'une clef de décodage va pouvoir automatiquement détecter.

Si l'adressage et la nature du défaut à la lecture sont conformes aux instructions données lors de l'écriture, on est alors certain qu'il s'agit d'un marquage authentique et le produit peut donc être identifié comme conforme et par la lecture de l'information qu'il porte, l'origine du produit et son acheminement sont ainsi contrôlés.

En revanche, si le défaut est absent ou si son adressage n'est pas en relation avec l'algorithme qui a régi l'écriture, on se trouve manifestement face à une tentative de fraude.

Une quantité infinie de combinaisons peuvent être mises en oeuvre pour authentifier le message inscrit. On décrit ci-dessous, à titre d'exem-

ple nullement limitatif, un certain nombre d'exemples.

Comme le montre la figure 1, on élimine un point dans un caractère, par exemple, celui qui correspond à l'adressage (Ac) et (Db) sans que cela rende le caractère illisible. Selon l'utilisateur et/ou le produit, on peut ainsi programmer une quantité innombrable de défauts répondant à une logique que l'on s'est initialement imposée. Par exemple tous les E constituant l'identification seront entachés par ce défaut. L'algorithme de codage sera alors implanté comme algorithme de décodage, ce sera clef dont il a été question précédemment.

L'avantage de l'imprimante à jet d'encre apparaît tout de suite, puisque au niveau de la commande, cette technique est plus particulièrement maîtrisée quelque soit la forme du support qui n'a plus besoin d'être plan mais peut épouser les profils les plus variés.

La réalisation de ces caractères spéciaux conduit à la génération de ces caractères selon un mode particulier. Généralement, dans les imprimantes à projection d'encre du type jet continu notamment, le descriptif des caractères est mémorisé et leur inscription se fait par appel du caractère choisi, c'est-à-dire que les 64 caractères ASCII sont en général mémorisés.

Dans la présente invention, pour l'utilisation de caractères en matrice 7 x 5, on créera la totalité des 128 combinaisons possibles des 7 points et on mémorisera les coefficients de charge correspondant à ces 128 trames.

L'écriture d'un message sera donc faite par appel successif des trames et non des caractères complets.

La réalisation de caractères inverses sera donc aussi obtenue par appel de trames dans un ordre différent.

Dans le cas d'une application avec des caractères réalisés en matrice 15 x 10 par exemple, le nombre de trames théoriques possibles est beaucoup plus grand et on peut concevoir qu'à la limite, toutes les trames théoriques ne puissent être étudiées ou disponibles. Les algorithmes de codage prendront alors en compte, dans une boucle particulière, la disponibilité ou non d'une trame et limiteront donc de manière automatique le nombre de combinaisons de caractères manquants.

Il est à noter que, par ce procédé, l'élimination d'un point peut être étendue à 2 ou 3 ou n suivant le nombre total de points utilisés dans un caractère, augmentant en cela la variété du codage sans altération de la lisibilité et que cela peut être aussi étendu à l'adjonction de points.

Un autre exemple extrème pourra être donné en adjoignant aux possibilités de codage une écriture en vidéo inverse totale ou partielle, par lettre ou par message.

Une telle imprimante à jet d'encre, permet d'inverser le sens vertical et horizontal comme le montrent les figures 2 et 3 qui représentent respectivement un (E) et un (A) inversés. L'utilisateur peut donc glisser dans l'inscription des informations inscrites sur son produit, ce type de défaut là où il veut et selon une loi de récurrence qu'il a préalablement définie et qui n'est connue que de lui seul et des personnes habilitées. La branche latérale du E est, dans l'exemple, constituée par la colonne (e) tandis que dans la figure 3, la barre supérieure du (A) occupe la rangée (G) au lieu de la rangée (A). Certes, la lisibilité visuelle est légèrement altérée, mais seule la connaissance de la clef permet de savoir s'il s'agit d'un défaut accidentel ou d'un défaut volontairement créé.

Un autre exemple de mise en oeuvre du procédé conforme à l'invention est illustré au moyen de la figure 4. Il peut plus particulièrement être mis en oeuvre grâce à l'utilisation d'une imprimante à jet d'encre. En effet, un tel dispositif permet de provoquer la coalescence de deux gouttes d'encre et donc de réaliser des caractères dans lesquels certains points sont de dimensions différentes tels que les points ayant respectivement pour adressage (Ac) et (Fa).

Enfin, un autre exemple est illustré au moyen de la figure 5, grâce, plus particulièrement à l'utilisation d'une imprimante à jet d'encre, on réalise des caractères de hauteur variable. La norme de la hauteur étant illustrée sur la figure 5 par la droite xy sachant que la base zz' est constante. Même si cette différence de hauteur ($+ \Delta h$ ou $-\Delta h$) qui est volontairement amplifiée sur la figure reste, dans la réalité suffisamment faible pour ne pas être perçue à l'oeil nu, il n'en est pas moins vrai qu'elle sera automatiquement décelée au niveau de la lecture grâce à la clef définie précédemment, c'est-à-dire à la mise en place au niveau des moyens de lecture de l'algorithme sur lequel a été basée l'écriture.

La mise en oeuvre donc d'un tel procédé conforme à l'invention conduit à une lutte efficace contre la fraude.

L'imprimante à jet d'encre est plus particulièrement adaptée car elle peut être commandée à partir d'un algorithme spécifique du produit et de son circuit de distribution. L'information inscrite est ensuite décodée au niveau des moyens de lecture tels que les caméras de type CCD, dotée d'une clef correspondant à cet algorithme d'écriture, et comme ceci a été dit précédemment grâce à la mise en oeuvre d'une technique de reconnaissance du caractère par balayage et identification colonne par colonne au lieu d'être appréhendée comme dans l'art connu de manière globale.

Les applications sont nombreuses et concernent tous les produits devant porter notamment des indications d'origine, de durée de conservation, de date limite de vente, etc ... tant dans le domaine des produits industriels que des produits de grande consommation ou au contraire de luxe.

**Revendications**

1. Procédé d'identification d'un produit obtenu par l'inscription d'information sous forme de caractères prédéterminés, caractérisé en ce qu'il consiste à réaliser l'écriture sous forme matricielle, chacun des points dans la matrice étant isolés les uns des autres; à introduire, selon un algorithme déterminé au moins un défaut dans la matrice d'au moins un des caractères; à procéder à une lecture par balayage et identification colonne par colonne des points inscrits de telle sorte que ces moyens de lecture munis d'une clef de décodage détectent et identifient le défaut volontairement introduit.

2. Procédé selon la revendication 1, caractérisé en ce que le défaut est constitué par l'absence volontaire d'un point de la matrice.

3. Procédé selon la revendication 1, caractérisé en ce que le défaut est constitué par une inversion du sens de l'écriture.

4. Procédé selon la revendication 1, caractérisé en ce que le défaut est constitué par la coalescence volontairement provoquée au niveau d'un point de la matrice, avec un adressage prédéterminé, connu uniquement de l'utilisateur.

5. Procédé selon la revendication 1, caractérisé en ce que le défaut est réalisé au niveau de la hauteur des caractères qui varie autour d'une hauteur normalisée (xy) d'une valeur (-Δh) ou (+Δh).

6. Imprimante capable de réaliser une écriture matricielle, caractérisée en ce que l'algorithme de commande de l'écriture induit la formation d'un défaut programmé selon l'une des revendications précédentes, défaut qui réapparaît au niveau de la lecture effectuée par des moyens de lecture fonctionnant avec une clef de décodage.

7. Imprimante selon la revendication 6, caractérisé en ce que celle-ci est une imprimante à jet d'encre.


**Patentansprüche**

1. Verfahren zur Identifizierung eines Produktes, das durch Einschreiben von Informationen in Form von vorgegebenen Zeichen erlangt wird, dadurch gekennzeichnet, daß es darin besteht, das Schreiben in Matrizenform durchzuführen, wobei jeder der Punkte in der Matrize von den anderen isoliert ist; gemäß einem bestimmten Algorithmus mindestens einen Fehler in die Matrize mindestens eines der Zeichen einzugeben; ein Lesen durch Abtastung und eine spaltenweise Identifizierung der eingetragenen Punkte so vorzunehmen, daß diese mit einem Dekodierungsschlüssel versehenen Lesemittel den willentlich eingegebenen Fehler entdecken und identifizieren.

2. Verfahren nach Anspruch 1, dadurch gekennzeichnet, daß der Fehler durch das willentliche Fehlen eines Punktes der Matrix gebildet wird.

3. Verfahren nach Anspruch 1, dadurch gekennzeichnet, daß der Fehler durch eine Umkehrung der Schreibrichtung gebildet wird.

4. Verfahren nach Anspruch 1, dadurch gekennzeichnet, daß der Fehler durch die willentlich hervorgerufene Verschmelzung in Höhe eines Punktes der Matrix mit einer vorgegebenen, nur dem Anwender bekannten Adressierung gebildet wird.

5. Verfahren nach Anspruch 1, dadurch gekennzeichnet, daß der Fehler in der Zeichenhöhe gebildet wird, die um eine Normhöhe (xy) eines Wertes (-Δh) oder (+Δh) variiert.

6. Drucker, der in Matrizenschreibweise arbeiten kann, dadurch gekennzeichnet, daß der Schreibsteuerungsalgorithmus die Bildung eines programmierten Fehlers nach einem der vorausgehenden Ansprüche induziert, wobei dieser Fehler beim Ablesen durch mit einem Dekodierungsschlüssel funktionierende Lesemittel wieder erscheint.

7. Drucker nach Anspruch 6, dadurch gekennzeichnet, daß dieser ein Tintenstrahldrucker ist.


**Claims**

1. A method of identification of a product achieved by the inscription of information in the form of predetermined characters, characterised in that it consists in performing the writing in matrix form, each of the points in the matrix being separated from the other ones; in introducing in accordance with a determined algorithm at least one defect in the matrix of at least one of the characters; in proceeding with a reading operation by a column by column scanning and identification of the inscribed points, in such manner that these reading means provided with a decoding key detect and identify the defect intentionally introduced.

2. A method according to claim 1, characterised in that the defect is constituted by the intentional omission of a point of the matrix.

3. A method according to claim 1, characterised in that the defect is constituted by an inversion of the writing direction.

4. A method according to claim 1, characterised in that the defect is constituted by the intentionally induced coalescence at the level of a matrix point with a predetermined address known solely to the user.

5. A method according to claim 1, characterised in that the defect is established at the level of the height of the characters which varies by a value (-Δh) or (+Δh) around a standardised height (xy).

6. A printer capable of performing a matrix writing, characterised in that the algorithm controlling the writing operation causes the formation of a defect programmed according to one of the preceding claims, which defect reappears at the reading level effected by reading means operating with a decoding key.

7. A printer according to claim 6, characterised in that the same is an ink jet printer.

Fig1

Fig2

Fig 3

Fig 4

Fig 5